(19) **Europäisches Patentamt**

**European Patent Office**

**Office européen des brevets**

(11) **EP 1 265 003 B1**

(12) **EUROPEAN PATENT SPECIFICATION**

(45) Date of publication and mention
of the grant of the patent:
**25.01.2006 Bulletin 2006/04**

(51) Int Cl.:
***F16G 1/28*** *(2006.01)*

(21) Application number: **02012706.4**

(22) Date of filing: **07.06.2002**

(54) **Toothed belt**

Zahnriemen

Courroie dentée

(84) Designated Contracting States:
**AT BE CH CY DE DK ES FI FR GB GR IE IT LI LU MC NL PT SE TR**

(30) Priority: **08.06.2001 IT TO20010557**

(43) Date of publication of application:
**11.12.2002 Bulletin 2002/50**

(73) Proprietor: **DAYCO EUROPE S.r.l.**
**66013 Chieti (IT)**

(72) Inventor: **Cipollone, Franco**
**66013 Chieti (IT)**

(74) Representative: **Cerbaro, Elena et al**
**STUDIO TORTA S.r.l.,**
**Via Viotti, 9**
**10121 Torino (IT)**

(56) References cited:
**EP-A- 0 368 099**          **EP-A- 0 655 568**
**GB-A- 1 312 164**          **US-A- 4 041 789**
**US-A- 4 427 403**          **US-A- 4 515 577**
**US-A- 4 586 915**          **US-A- 4 627 828**

**Description**

The present invention relates to a toothed belt, i.e. a belt comprising teeth on one face which mesh with teeth on at least two pulleys to form a transmission system.

Toothed belts comprise a body made of elastomeric material and having teeth on one face; a cover fabric adhering to the surface of the teeth; and reinforcing inserts, hereinafter referred to as "cords", extending longitudinally inside the body.

Each component part of the belt contributes towards improving performance in terms of mechanical strength, to reduce the risk of failure or wear, and to increase the power that can be transmitted by the belt.

Since toothed belts on modern engines are increasingly designed for long life to reduce the number of replacements required over the working life of the vehicle, extensive research has been conducted into extending average belt life by improving the mechanical strength of the teeth by developing new mixes, making dimensional improvements to the teeth, and improving fabric wear resistance.

Dimensional improvements to the teeth are normally centered around the tooth profile. Though current types include straight, involute or arc-shaped, the most commonly used tooth profiles comprise a curve defined by a combination of straight, arc-shaped and involute portions.

Document EP-A- 0 655 568 shows a toothed belt according to the preamble of claim 1.

Despite the wide variety of currently marketed profiles, a demand still exists for further improvement in the performance and working life of toothed belts.

It is an object of the present invention to provide a toothed belt with an improved tooth profile for longer average working life.

According to the present invention, there is provided a toothed belt comprising a body made of elastomeric material and having reinforcing cords; toothing having a given pitch and defined by a number of teeth extending integrally from a face of said body; and a cover fabric adhering to the surface of the teeth; said teeth having a resisting section and a pressure angle ALPHA; characterized in that said pitch ranges from 7 mm to 11 mm; the ratio between said resisting section and said pitch ranges from 0.62 to 0.71; and said pressure angle ranges from 18° to 24°.

A non-limiting embodiment of the present invention will be described by way of example with reference to the accompanying drawings, in which:

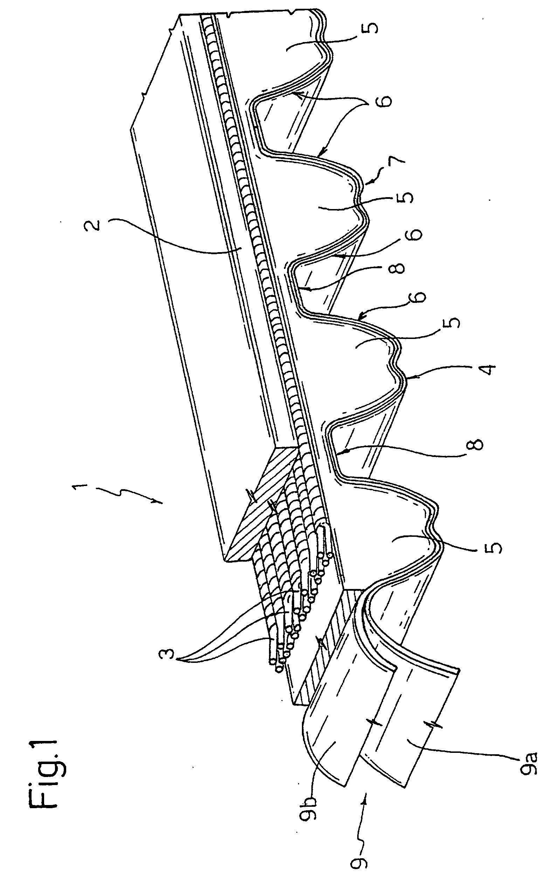

Figure 1 shows a partial view in perspective of a toothed belt in accordance with the teachings of the present invention;
Figure 2 shows the profile of a portion of the Figure 1 belt meshing with a toothed pulley;
Figure 3 shows the belt profile;
Figure 4 shows a graph of root surface and tooth strength indexes and the product of the two as a function of the resisting section to pitch ratio; and
Figure 5 shows the engine on which the working life of the toothed belt according to the present invention was tested.

Number 1 in the accompanying drawings indicates as a whole a toothed drive belt.

Belt 1 comprises a body 2 made of elastomeric material, preferably HNBR (hydrogenated nitrile rubber), and in which are embedded a number of threadlike, longitudinal reinforcing cords 3, preferably made of glass fiber.

Belt 1 comprises toothing 4 of pitch P and defined by a number of teeth 5 extending integrally from a face of body 2 and alternating with spaces 8; the profile of each tooth 5 is defined by two flanks 6 and a crest 7; the spaces have a bottom or root surface 11 to which the flanks are joined by arc-shaped fillets r; and teeth 5 have a resisting section - i.e. a section joined to body 2 and between the points T connecting fillets r to root surface 11 - of width S, so that root surface 11 is of a width F = P - S.

Toothing 4 is covered with a fabric 9 defined by a first and/or second layer 9a, 9b of preferably polyamide fabric.

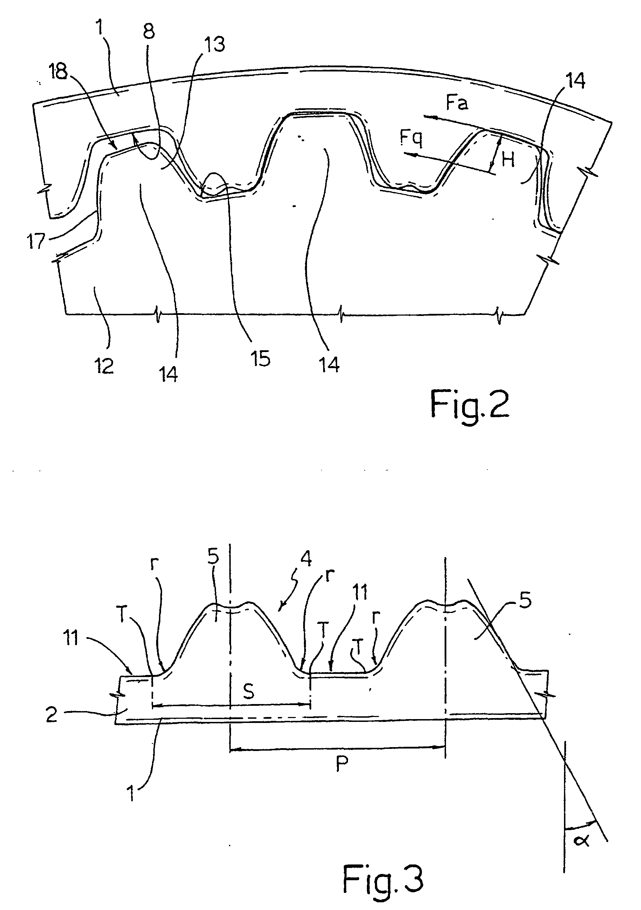

As shown in Figure 2, toothed belt 1 meshes with a pulley 12 having toothing 13 of pitch P and defined by a number of teeth 14 alternating with spaces 15 and each defined by flanks 17 and a crest 18.

As shown in Figure 2, the interaction between toothing 4 of toothed belt 1 and toothing 13 of pulley 12 substantially comprises an exchange of thrust forces Fq acting on flanks 6 of teeth 5 of belt 1, and friction forces Fa generated between crests 18 of teeth 14 of pulley 12 and respective root surfaces 11.

With regard to the bending stress generated in the resisting section of the tooth by force Fq, the following equation applies:

$$Mf = Fq *H = (\sigma'f) * (B) * (S^2) /6$$

where:

Mf = the bending moment in the resisting section;
H = the arm of force Fq with respect to the resisting section;
B = the belt width;
σf = the bending stress in the resisting section.

Given a unit tooth thickness (B=1), the above equation gives:

$$Fq = (\sigma f)\ (S^2/6H)$$

For a fixed applied force (Fq) and point of application (H) value, a bending stress is therefore defined depending on the parameter:

$$(S^2)/(6H)$$

Hereinafter, this parameter will be referred to as TSI (tooth strength index):

$$TSI = (S^2)/(6H)$$

and expresses the ability of the belt tooth to withstand the bending stress to which it is subjected.
With regard to the friction force Fa on root surface 11, the following equation applies:

$$\sigma a = Fa/(F*B) = \mu(N)/(F*B)$$

where:

σa = friction stress;
B = the belt width;
μ = the belt/pulley friction coefficient;
N = the force perpendicular to root surface 11.

For a belt of unit width (B=1) and given F=P-S :

$$\sigma a = (\mu N)\ /\ (P-S)$$

As (P-S) increases, the specific load on root surface 11 decreases. This parameter is referred to as root surface strength index:

$$RSSI = (P-S)$$

In the light of the above definitions, the best bending resistance of the teeth and the best wear resistance of the root surfaces can be assumed to be obtained by maximizing the product TSI*RSSI. The physical significance of this product lies in the "efficiency" (not in the physical sense, but generally in the sense of "performance") of a system being known to be proportional to the efficiency of each of its individual component parts and therefore to the product of the efficiency of its individual component parts. Maximizing product TSI*RSSI is therefore to be interpreted as maximizing the system.

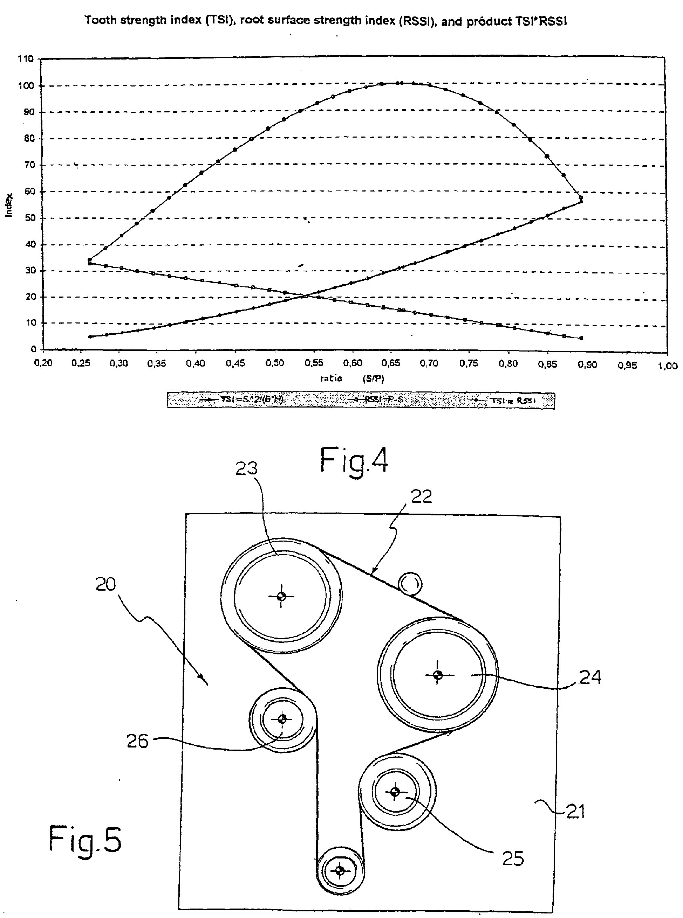

The Figure 4 graph shows TSI and RSSI values and the product of the two as a function of the S/P ratio. The function TSI*RSSI = (P-S) * S2/6H is maximum when S/P = 2/3, and shows percentage reductions of less than 1.5% - which may technically be considered optimum - about a maximum of 0.62 to 0.71.

For a toothed belt with a pitch P of 7 to 11 mm and a resisting section to pitch ratio of 0.62 to 0.71, the best performance in terms of working life of the belt has been found to be obtained with a pressure angle of 18° to 24°.

Pitch preferably ranges between 8 and 10 mm and is more preferably 9.525 mm; the pressure angle preferably ranges between 19° and 21° and is more preferably 20°; and the resisting section to pitch ratio preferably ranges between 0.64 and 0.68 and is more preferably 0.66.

A non-limiting embodiment of the belt is described below.

A belt 1 was produced with 137 teeth, a body 2 of an HNBR-based mix, a Nylon cover fabric 9, and glass fiber cords 3. In Table 1, belt B has a tooth profile in accordance with the present invention, while belt A has a body, fabric and cords of the same chemical composition as belt B, but a tooth profile in accordance with the known state of the art.

TABLE 1

| Belt profile | Pitch (mm) | Root R (mm) | Resisting section S (mm) | Tooth height (mm) | Pressure angle (degrees) | Fillet radius (mm) | S/P ratio |
|---|---|---|---|---|---|---|---|
| Belt A | 9.525 | 6.07 | 7.47 | 2.69 | 20 | 1 | 0.78 |
| Belt B | 9.525 | 5.15 | 6.35 | 2.69 | 20 | 1 | 0.66 |

More specifically, belt A has an S/P ratio of 0.78.

Belts B and A were endurance tested on a dynamic test bench 20 (Figure 5) comprising an engine 21 with a belt drive 22 for synchronously operating a camshaft 23 and an injection pump 24 - the delivery of which, by means of injectors (not shown), was connected to an external circuit - and for operating an oil pump 25. In the absence of combustion, engine 21, with no pistons, was driven by an appropriately powered electric motor (not shown) for operating camshaft 23 and injection pump 24 at maximum flow and a constant engine (drive shaft) speed of 4000 rpm. The drive was set up as originally on the engine, with an automatic tensioner 26; the test temperature was that determined by friction of the rotating members; and the temperature measured inside a closed box (not shown) was approximately 60-70°C and maintained constant throughout testing.

In the above test conditions, the average working life of the toothed belts, subjected to a statistically significant number of test runs, was roughly 950 hours for the known belt A, and 1350 hours for belt B according to the invention.

The advantages of the toothed belt according to the teachings of the present invention will be clear from the foregoing description.

In particular, the improved profile, which improves both the bending resistance of the teeth and the wear resistance of the cover fabric, greatly increases the working life of the belt.

Clearly, changes may be made to the toothed belt as described herein without, however, departing from the scope of the accompanying Claims. For example, changes may be made to the materials of the various parts of the toothed belt. In particular, the body may comprise an EPDM-based mix.

**Claims**

1. A toothed belt (1) comprising a body (2) made of elastomeric material and having reinforcing cords (3); toothing (4) having a given pitch (P) and defined by a number of teeth (5) extending integrally from a face of said body; and a cover fabric (9) adhering to the surface of the teeth; said teeth having a resisting section (S) and a pressure angle .(ALPHA); **characterized in that** said pitch (P) ranges from 7 mm to 11 mm; the ratio between said resisting section and said pitch (S/P) ranges from 0.62 to 0.71; and said pressure angle (ALPHA) ranges from 18° to 24°.

2. A toothed belt as claimed in Claim 1, **characterized in that** said pitch ranges from 8 mm to 10 mm.

3. A toothed belt as claimed in Claim 2, **characterized in that** said pitch is 9.525 mm.

4. A toothed belt as claimed in any one of Claims 1 to 3, **characterized in that** said pressure angle ranges from 19° to 21°.

5. A toothed belt as claimed in Claim 4, **characterized in that** said pressure angle is 20°.

6. A toothed belt as claimed in any one of Claims 1 to 5, **characterized in that** said ratio between said resisting section and said pitch (S/P) ranges from 0.64 to 0.68.

7. A toothed belt as claimed in Claim 6, **characterized in that** said ratio between said resisting section and said pitch (S/P) is 0.66.

8. A toothed belt as claimed in any one of the foregoing Claims, **characterized in that** said body (2) comprises an HNBR-based mix.

9. A toothed belt as claimed in any one of the foregoing Claims, **characterized in that** said reinforcing cords (3) are made of glass fiber.

10. A toothed belt as claimed in any one of the foregoing Claims, **characterized in that** said fabric (9) comprises a first (9a) and a second (9b) layer.

11. A toothed belt as claimed in Claim 10, **characterized in that** said first (9a) and said second (9b) layer of said fabric (9) are made of polyamide.

12. A toothed belt as claimed in any one of Claims 1 to 9, **characterized in that** said fabric (9) comprises one layer.

**Patentansprüche**

1. Zahnriemen (1), der einen Körper (2), der aus Elastomermaterial besteht und verstärkende Schnüre (3) aufweist; Verzahnung (4), die eine vorgegebene Teilung (P) hat und durch eine Anzahl von Zähnen (5) gebildet wird, die sich integral von einer Außenfläche des Körpers erstrecken, und ein Abdeckgewebe (9) umfasst, das an der Oberfläche der Zähne haftet, wobei die Zähne einen Widerstandsabschnitt (S) und einen Druckwinkel (ALPHA) haben, **dadurch gekennzeichnet, dass** die Teilung (P) von 7 mm bis 11 mm reicht, das Verhältnis zwischen dem Widerstandsabschnitt und der Teilung (S/P) von 0,62 bis 0,71 reicht, und der Druckwinkel (ALPHA) von 18° bis 24° reicht.

2. Zahnriemen nach Anspruch 1, **dadurch gekennzeichnet, dass** die Teilung von 8 mm bis 10 mm reicht.

3. Zahnriemen nach Anspruch 2, **dadurch gekennzeichnet, dass** die Teilung 9,525 mm beträgt.

4. Zahnriemen nach einem der Ansprüche 1 bis 3, **dadurch gekennzeichnet, dass** der Druckwinkel von 19° bis 21° reicht.

5. Zahnriemen nach Anspruch 4, **dadurch gekennzeichnet, dass** der Druckwinkel 20° beträgt.

6. Zahnriemen nach einem der Ansprüche 1 bis 5, **dadurch gekennzeichnet, dass** das Verhältnis zwischen dem Widerstandsabschnitt und der Teilung (S/P) von 0,64 bis 0,68 reicht.

7. Zahnriemen nach Anspruch 6, **dadurch gekennzeichnet, dass** das Verhältnis zwischen dem Widerstandsabschnitt und der Teilung (S/P) 0,66 beträgt.

8. Zahnriemen nach einem der vorangehenden Ansprüche, **dadurch gekennzeichnet, dass** der Körper (2) ein Gemisch auf HNBR-Basis umfasst.

9. Zahnriemen nach einem der vorangehenden Ansprüche, **dadurch gekennzeichnet, dass** die verstärkenden Schnüre (3) aus Glasfaser bestehen.

10. Zahnriemen nach einem der vorangehenden Ansprüche, **dadurch gekennzeichnet, dass** das Gewebe (9) eine erste (9a) und eine zweite (9b) Schicht umfasst.

11. Zahnriemen nach Anspruch 10, **dadurch gekennzeichnet, dass** die erste (9a) und die zweite (9b) Schicht des Gewebes (9) aus Polyamid bestehen.

12. Zahnriemen nach einem der Ansprüche 1 bis 9, **dadurch gekennzeichnet, dass** das Gewebe (9) eine Schicht umfasst.

**Revendications**

1.  Courroie dentée ou crantée (1) composée d'un corps (2) en matériau élastomère et pourvue de fils de renforcement (3) ; la denture (4) ayant un pas (P) donné et étant définie par un nombre de dents (5) s'étendant intégralement d'une face du dit corps ; et d'une toile ou nappe de revêtement (9) adhérant à la surface des dents ; lesdites dents ayant une section résistante (S) et un angle de pression ($\alpha$ - ALPHA) ; **caractérisée en ce que** ledit pas (P) a une valeur comprise entre 7 mm et 11 mm ; le rapport entre ladite section résistante et ledit pas (S/P) a une valeur comprise entre 0,62 et 0,71 et ledit angle de pression ($\alpha$) a une valeur comprise entre 18° et 24°.

2.  Courroie dentée selon la revendication 1, **caractérisée en ce que** ledit pas a une valeur comprise entre 8 mm et 10 mm.

3.  Courroie dentée selon la revendication 2, **caractérisée en ce que** ledit pas a une valeur de 9,525 mm.

4.  Courroie dentée selon l'une des revendications 1 à 3, **caractérisée en ce que** ledit angle de pression a une valeur comprise entre 19° et 21°.

5.  Courroie dentée selon la revendication 4, **caractérisée en ce que** ledit angle de pression a une valeur de 20°.

6.  Courroie dentée selon l'une des revendications 1 à 5, **caractérisée en ce que** ledit rapport entre ladite section résistante et ledit pas (S/P) a une valeur comprise entre 0,64 et 0,68.

7.  Courroie dentée selon la revendication 6, **caractérisée en ce que** ledit rapport entre ladite section résistante et ledit pas (S/P) a une valeur de 0,66.

8.  Courroie dentée selon l'une des revendications précédentes, **caractérisée en ce que** ledit corps (2) est composé d'un mélange à base de caoutchouc nitrile hydrogéné (HNBR).

9.  Courroie dentée selon l'une des revendications précédentes, **caractérisée en ce que** lesdits fils de renforcement (3) sont en fibre de verre.

10.  Courroie dentée selon l'une des revendications précédentes, **caractérisée en ce que** ladite toile ou nappe (9) comprend une première couche (9a) et une deuxième couche (9b).

11.  Courroie dentée selon la revendication 10, **caractérisée en ce que** ladite première (9a) et ladite deuxième (9b) couches de ladite toile ou nappe (9) sont en polyamide.

12.  Courroie dentée selon l'une des revendications 1 à 9, **caractérisée en ce que** ladite toile ou nappe (9) se compose d'une couche.

Fig.1

EP 1 265 003 B1

Fig.2

Fig.3

Tooth strength index (TSI), root surface strength index (RSSI), and product TSI*RSSI

Fig.4

Fig.5